(19)

**Europäisches Patentamt**
**European Patent Office**
**Office européen des brevets**

(11) **EP 4 559 818 A1**

(12) **EUROPEAN PATENT APPLICATION**

(43) Date of publication:
**28.05.2025 Bulletin 2025/22**

(21) Application number: **23212299.4**

(22) Date of filing: **27.11.2023**

(51) International Patent Classification (IPC):
**B64F 5/10** (2017.01)    **G06F 30/15** (2020.01)
**G06F 30/20** (2020.01)    **G06F 113/28** (2020.01)
**G06F 111/20** (2020.01)

(52) Cooperative Patent Classification (CPC):
**B64F 5/10; G06F 30/15; G06F 30/20;** B64C 1/069;
G06F 2111/20; G06F 2113/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Airbus Operations GmbH**
**21129 Hamburg (DE)**

(72) Inventor: **Galas, Björn**
**21129 Hamburg (DE)**

(54) **SIMULATION METHOD, ASSEMBLY METHOD, ASSEMBLY PROGRAM, COMPUTER-READABLE DATA CARRIER, COMPUTING DEVICE AND ASSEMBLY ARRANGEMENT FOR ASSEMBLING AN APPARATUS**

(57)    A simulation method is provided of simulating correction parameters (K) for aligning a first mating surface (13a) of a first section (3a) and a second mating surface (13b) of a second section (3b) of an apparatus (1), in particular an airframe of an aircraft, with respect to each other, comprising the steps of obtaining design coordinates of a simulation set (40) of measurement points (p) on each of the first section (3a) and the second section (3b); measuring concrete coordinates of at least some of the measurement points (p) of the simulation set (40) when the first mating surface (13a) and the second mating surface (13b) are arranged such that they are facing each other within a predefined distance range from each other; comparing the design coordinates to the concrete coordinates; and deriving at least one correction parameter (K) from the comparison. Furthermore, an assembly method for assembling a first section (3a) and a second section (3b) of an apparatus (1), a corresponding assembly program (31), a computer-readable data carrier (32, 33, 34), a computing device (30) and a respective assembly arrangement (10) for assembling a first section (3a) and a second section (3b) of an apparatus (1) are provided.

**Fig. 3**

## Description

Technical Field

The present disclosure relates to the field of assembling large apparatuses from different sections to be precisely aligned with respect to each other. In particular, the disclosure relates to a simulation method of simulating correction parameters for aligning a first mating surface of a first section and a second mating surface of a second section of an apparatus, in particular an airframe of an aircraft, with respect to each other, to an assembly method for assembling a first section and a second section of an apparatus, in particular an airframe of an aircraft, along a first mating surface of the first section and a second mating surface of the second section, to an assembly program comprising instructions, to a computer-readable data carrier, to a computing device, and to an assembly arrangement for assembling a first section and a second section of an apparatus, in particular an airframe of an aircraft, along a first mating surface of the first section and a second mating surface of the second section.

Technical Background

Methods for assembling large apparatuses from different sections to be precisely aligned with respect to each other are known from the prior art. The apparatuses, in particular vehicles, such as aircrafts, are commonly assembled in assembling shops or hangers. There, the apparatus sections are first coarsely aligned to each other. A fine alignment then takes place when iteratively joining and fixing respective apparatus sections to each other. Such iterative processes can be cumbersome and time-consuming. According to the prior art, computer-aided methods have been suggested for increasing accuracy and reliability of such assembly methods.

EP 4 181 009 A1, for example, describes a reliable and high-precision computer-implemented method to determine the final geometry of two or more aircraft real parts, in particular to predict final measurements even at non-visible or non-measurable gaps and overlaps in said aircraft real parts, and when there is a kinematic between them. Said computer-implemented method comprises the following steps: obtaining digital data by independently scanning all the aircraft real parts; creating a digital twin model from the obtained digital data, performing a virtual assembly of the aircraft digital parts; and reporting final measurements.

US 11 526 636 B2 deals with methods and systems relating to the design and testing of systems that include hinged flight control surfaces of aircraft are disclosed. The systems and methods disclosed herein make use of a structural model representing a structural environment of the system in a relatively simple manner. In various embodiments, the structural model comprises one or more actuation branches having a common linear actuation direction, a load mass, and a massless connector representative of a hinge line of the flight control surface. The massless connector is connected to and disposed between the one or more actuation branches and the load mass and is movable along the common linear actuation direction so that linear movement of the massless connector is correlated to rotational movement of the hinged flight control surface.

US 10 430 548 B2 relates to a computer-implemented method for space frame design involving constructing a load stress map in a geometrical boundary representation of a design space, defining attachment points and load application points in the design space, creating a starting network of interconnecting lines between each two of the attachment points and load application points in the design space, assigning load application factors to each line of the starting network of interconnecting lines based on values of the load stress map, generating potential space frame designs by culling different subsets of lines of the starting network of interconnecting lines for each potential space frame design according to variable culling parameters, evaluating the potential space frame designs with respect to optimization parameters, combining the culling parameters for the potential space frame designs the performance score of which is above a predefined performance threshold, and iterating the steps of generating potential space frame designs and evaluating the potential space frame designs on the basis of the combined culling parameters.

Assembly methods, as known from the prior art, do not seem to satisfy requirements for particularly joining relatively large parts of apparatuses, such as sections of fuselages of aircrafts, together. Commonly, a manual fuselage join-up process is carried out in that sections to be joined are positioned on rigid jigs at a certain distance from each other. During the section join-up, both sections are moved in translational direction (preferably only in flight direction) until taking up their final position.

Summary

It may thus be seen as an object to reduce built-in stresses during assembly of an apparatus, and to decrease the setup time that positively contributes to the ramp-up. In other words, it can be seen as an object, to provide an efficient and fast, while at the same time highly reliable as well as accurate assembly of apparatuses. These objects are at least partly achieved by the subject-matter of the independent claims.

In particular, a simulation method of simulating correction parameters for aligning a first mating surface of a first section and a second mating surface of a second section of an apparatus, in particular an airframe of an aircraft, with respect to each other, comprising the steps of obtaining design coordinates of a simulation set of measurement points on each of the first section and the second section measuring concrete coordinates of at least some of the measurement points of the simulation set when the first mating surface and the second mating surface are arranged such that they are facing each other within a predefined distance range from each other; comparing the design coordinates to the concrete coordinates; and deriving at least one correction parameter from the comparison.

An assembly method for assembling a first section and a second section of an apparatus, in particular an airframe of an aircraft, along a first mating surface of the first section and a second mating surface of the second section, is provided, comprising the steps of arranging the first mating surface and the second mating surface such that they are facing each other within a predefined distance range from each other; and aligning the first mating surface and the second mating surface in a projection along a straight mating line based on at least one correction parameter of the first mating surface and/or the second mating surface derived from a corresponding computer-implemented simulation method.

An assembly program is provided comprising instructions which, when the program is executed by a computing device, cause the computing device to carry out a corresponding simulation method and/or a corresponding assembly method.

A computer-readable data carrier is provided having stored thereon a corresponding assembly program.

A computing device is provided configured to carry out a corresponding assembly program and/or comprising a corresponding computer-readable data carrier.

Assembly arrangement for assembling a first section and a second section of an apparatus, in particular an airframe of an aircraft, along a first mating surface of the first section and a second mating surface of the second section, is provided, configured to carry out a corresponding assembly method, comprising a corresponding assembly program, comprising a corresponding computer-readable data-carrier, and/or comprising a corresponding computing device.

The first and the second section may be provided as complementary shaped joining sections of an airframe. The mating surfaces may be arch-shaped, elliptical and/or circular and may be provided at a flange or alike. A semiautomatic assembly procedure can be developed, based on production trials and experience in series production, to optimise join-up of the mating surfaces, for example flanges of a rear centre tank of an airframe. The assembly sequence can be built on in-situ measurements on the Major Component Assembly Line (MCA) and a mathematical calculation model.

The locations of the two mating surfaces can determined using the measurements. A laser tracker and a hand-held probe with a spherical probe tip can be used as a measuring instrument for the measurements. The measured coordinates can correspond to the design coordinates. The corrective values required for positioning the flanges can be calculated using a mathematical approach. Both sections can thus be optimally aligned together using the calculated correction parameter and/or respective parameter values. As a result, gaps between the structural components can be reduced to a minimum and inadmissible stresses can be prevented.

For example, the first mating surface and the second mating surface may be arranged at a distance range of around 500 mm with respect to each other. By the alignment, the mating surface can be arranged essentially in parallel to each other. The assembly method may further comprise the steps of moving the first section and the second section with respect to each other along the straight mating line until the first mating surface abuts the second mating surface; and joining the first section and the second section together. The assembly method may thus involve joining the first section and the second section together.

A computer-readable data carrier may include and/or be comprised of a computer-readable medium and/or a data carrier signal carrying the assembly program and/or comprising respective instructions which, when the program is executed by a computing device, cause the computing device to carry out a simulation method and/or assembly method.

The proposed solution provides an innovative assembly procedure to achieve gap-free and stress-free assembly of apparatus sections. The solution can be particularly advantageous for joining sections of an aircraft fuselages together. This is especially the case, if the sections comprise relatively complex structures, such as when aircraft fuselages are provided with rear centre tank modules or alike.

Further developments can be derived from the dependent claims and from the following description. Features described with reference to devices and arrangements may be implemented as method steps, or vice versa. Therefore, the description provided in the context of the computing device and/or assembly arrangement applies in an analogous manner also to respective methods. In particular, the functions of the computing device and/or of the assembly arrangement and of their or its, respectively, components may be implemented as method steps of the methods and the method steps may be implemented as functions of the computing device and/or of the assembly arrangement.

According to an aspect of a simulation method, the step of obtaining the measurement points involves extracting design parameters relating to the design coordinates from a design data set at least partly representing the first section and the second section. Relevant areas for the simulation can be extracted from the design data set, for example provided in form of computer aided design (CAD) data for the first section and the second section, in particular for the first mating surface and the second mating surface, respectively, thereof. Relevant areas for the simulation may contain information on the measurement points, e.g., areas. Respective metadata may include coordinates to be measured of the respective measurement points (X, Y, Z) and/or respective locations of measurement points (where measurements should be taken) The measurements can be taken in comparison with the extracted CAD-data, analysed and then stored in a database. This may help in organising, assigning and/or verifying the measurements, and thus further improve efficiency of respective assembly procedures.

According to an aspect of a simulation method, a number of concrete coordinates of at least some of the measurement points of the simulation set used for the comparison amounts to at least 3, preferably at least 10, most preferably at least 20. An individual marker can be assigned to each measurement point. This will allow for an unequivocal assignment of the measuring points in the simulation.

According to an aspect of a simulation method, the simulation set contains a surface subset of measurement points relating to the first mating surface and to the second mating surface and/or a reference subset of measurement points relating to reference points on the first section and the second section. The step of obtaining the design coordinates may thus involve determining theoretical reference points from the extracted design data. The step of measuring the measurement points may involve measuring concrete coordinates of the reference points corresponding to the theoretical reference points. This helps in further increasing reliability as well as accuracy of respective assembly procedures.

According to an aspect of a simulation method, at least some of the reference points refer to tack holes for mechanically connecting the first section and the second section with each other. A differentiation can be made between flange contact surface measurements and tack hole measurements. When the tack holes are measured, a locating element, such as a measurement sensor ball can represent the holes produced by a supplier of the sections to be joined together. Thereby, an optimal position of the tack holes can be defined. Once the measurements have been taken, the coordinates of the measuring points can be portrayed in the simulation environment, in point cloud format. The generated point clouds contain information on the position and orientation of the flanges (connecting surfaces) such as the position of the reference holes/tack holes, that are required for the alignment and attachment of the complete frame. The (flange and reference hole) points should be considered separately from each other in the data record for the associated frames. This helps in further increasing reliability as well as accuracy of respective assembly procedures.

According to an aspect of a simulation method, the correction parameters describe rotational motions and/or translational motions of at least one of the first section and the second section. Separating the surface points from the reference points may help to define the translational motions and/or rotational motions, respectively, for achieving an alignment of the first mating surface and the second mating surface. Thereby, efficiency and reliability as well as accuracy of respective assembly procedures can be further improved.

According to an aspect of a simulation method, the method may further comprise the step of determining a centroid and/or a surface normal for at least one of the first mating surface and the second mating surface. All translational and rotational corrections can relate to the centroid, i.e., centre point. Thereby, efficiency and reliability as well as accuracy of respective assembly procedures can be further improved.

According to an aspect of a simulation method, the method may further comprise the steps of determining a relative distance between the centroid of the first mating surface and the centroid of the second mating surface. Rotational motions can then be easily translated to translational corrections, such as vertical movements, of bearing points for at least one of the first section and the second section. Thereby, carrying out respective assembly procedures may be further facilitated and/or automatised, thus further increasing their efficiency and reliability as well as accuracy.

According to an aspect of a simulation method, the method may further comprise the step of determining a relative tilt angle between the first mating surface and the second mating surface. Calculating the centroid and the surface normal helps in determining the relative tilt angle. The relative tilt angle may include assembly tolerances of the respective manufacturing stations and the detailed part tolerance related to a perpendicularity of the mating surfaces, which may be provided as flanges on the first section and/or the second section. The relative angle between the components can be calculated over the surface normal of the mating surfaces, which may be formed as a part of a milled frame. This helps in further facilitating and/or automatising respective assembly procedures, thus further increasing their efficiency and reliability as well as accuracy.

According to an aspect of a simulation method, the first section serves as a master part having a fixed position and the second section serves as slave part having a variable position. The fixed position can serve as a reference position and may thus help in facilitating to provide the at least one correction parameter. This may again help in further facilitating and/or automatising respective assembly procedures, thus further increasing their efficiency and reliability as well as accuracy.

Brief Description of the Drawings

The subject matter will hereinafter be described in conjunction with the following drawing figures, wherein like numerals denote like elements, and wherein:

Fig. 1 is a schematic side view of an apparatus in the form of an aircraft comprising a fuselage having several sections joined together.

Fig. 2 is a schematic side view of an assembly arrangement comprising two sections of the apparatus arranged at a distance from each other to be joined together.

Fig. 3 is a schematic representation of respective details of the two sections of the apparatus arranged at a distance from each other to be joined together as illustrated in Fig. 2.

Fig. 4 is a schematic representation of a measurement device applied for providing measurements to be used for determining concrete coordinates of measurement points on sections of apparatuses.

Fig. 5 is a schematic another representation of a measurement device applied for providing measurements to be used for determining concrete coordinates of further measurement points on sections of apparatuses.

Fig. 6 is a schematic rear view of a first section of the apparatus.

Fig. 7 is a schematic front view of a second section of the apparatus.

Fig. 8 is a schematic representation of a computing device for implementing a simulation method and/or assembly method by means of a respective assembly program and/or computer-readable data carrier as part of an assembly arrangement.

Fig. 9 is a schematic perspective view of measurement points of the two sections of the apparatus.

Fig. 10 is another schematic perspective view of the measurement points of the two sections of the apparatus shown in Fig. 9.

Fig. 11 is a schematic representation of correction parameters for aligning the two sections of the apparatus to each other.

Fig. 12 is a schematic representation of reference points of the two sections of the apparatus before their alignment.

Fig. 13 is a schematic representation of the reference points of the two sections of the apparatus shown in Fig. 12 after their alignment.

Fig. 14 is a schematic representation of one of the reference points of the two sections of the apparatus before its alignment.

Fig. 15 is a schematic representation of the reference points of the two sections of the apparatus shown in Fig. 14 after its alignment.

Fig. 16 is a schematic representation of steps of a simulation method and/or assembly method.

Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

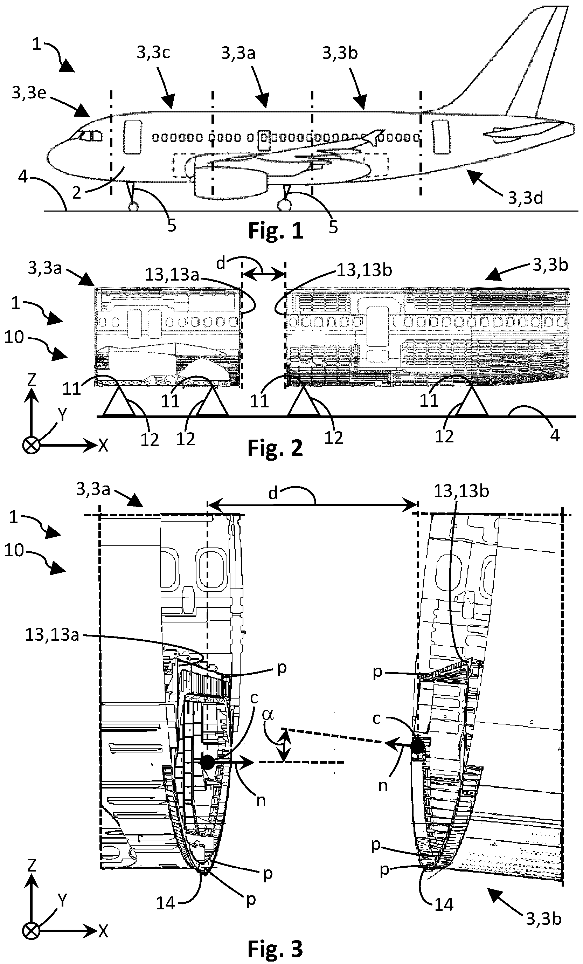

Fig. 1 shows a schematic side view of an apparatus 1 in the form of an aircraft comprising a fuselage 2 having several apparatus sections 3, joined together. For example, the sections 3 comprise a first section 3a, a second section 3b, a third section 3c, a fourth section 3d, and/or a fifth section 3e. The first section 3a may be a centre section of the fuselage 2. The second section 3b may be an after section of the fuselage 2. The third section 3c may be a front section of the fuselage 2. The fourth section 3d may be a tail section of the fuselage 2. The fifth section 2e may be a nose section of the fuselage 2. The fuselage 2 may rest on a ground 4 by means of a landing gear 5.

Fig. 2 shows a schematic side view of an assembly arrangement 10 comprising two sections 3, namely, for example, the first section 3a and the second section 3b of the apparatus 2 arranged in a distance d from each other to be joined together. The sections 3 rest on bearing points 11 on the ground 4 instead of on the landing gear 5. The bearing points can be provided by respective jigs 12 resting on the ground 4.

The apparatus 1 and thus, the assembly arrangement 10, extend in a longitudinal direction X, a transverse direction Y, and a height direction Z, together forming a Cartesian coordinate system. The distance d is measured essentially in parallel to the longitudinal direction X between mating surfaces 13 of the sections 3, to be joined together. The first section 3a has a mating surface 13a and the second section 3b has a mating surface 13b that face each other with the distance d between each other.

For example, before the join-up process, both sections are synchronized roughly on a Major Component Assembly (MCA) station (not shown) providing the jigs 12 with the bearing points 11. The forward facing first section 3a can be placed on fixed bearing points 11 (no degrees of freedom). The rearward facing second section 3b can be placed on floating bearing points 11, that allow for translational motion in a plane generated by the longitudinal direction X and the transverse direction Y, while they may allow for rotational adjustments about transverse direction Y. After the sections 3 are positioned on the bearing points 11, the second section 3b can be directed in a translational movement towards the first section 3a.

Fig. 3 shows a schematic representation of respective details of the two sections 3 of the apparatus 1 arranged at the distanced d from each other to be joined together as illustrated in Fig. 2. The mating surfaces 13, 13a, 13b can be provided at flanges 12 formed at the first section 3a and the second section 3b, respectively. In the present example, instead of a conventional riveting of transverse joints (not shown), the fuselage 2, i.e., the sections 3 thereof, can bolted together at the flanges 14 by means of respective bolts (not shown).

A great challenge can be seen in that the flanges 14 of the sections 13 must be aligned parallel to each other, to have the least possible incipient stress on the airframe of the apparatus1. During the join-up process the second section 3a can be moved towards the first section 3a, until the distance d amounts to ca. 500 mm between the flanges, for example measured in parallel to the longitudinal direction X between respective centroids c of the mating surfaces 13. Large gaps can form between the flanges 14, contingent on the detail part and assembly tolerances. These gaps may initiate major stresses in structures of the fuselage 2 during the bolting operation, which can lead to premature material failures.

For avoiding such stresses, the flange 14, i.e., the mating surfaces 13 thereon, should be perfectly aligned with each other before initiating and during the bolting operation. In order to achieve this, at least one correction parameter K, such as an angle $\alpha$ measured between respective surface normal N of the mating surfaces 13 should be provided. For example, by tilting the first section 3a by an amount corresponding to the angle $\alpha$, the first mating surface 13a and the second mating surface 13b can be aligned to each other.

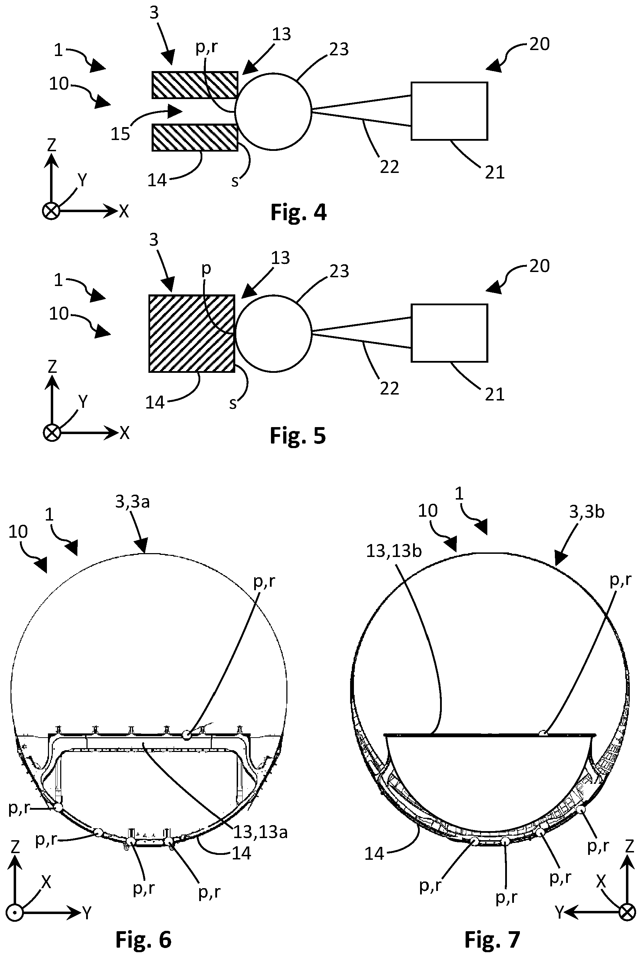

The angle $\alpha$ can be calculated by means of a simulation based on measurement points p provided at each mating surface 13. Some of these measurement points can be provided on a surface s of the respective mating surface 13, while others can be provided as reference points r, for example associated to mounting points 15, that can be provided in the form of tack holes on the flanges 14 (see Figs. 4 and 5).

Fig. 4 shows a schematic representation of a measurement device 20 applied for providing measurements to be used for determining concrete coordinates of measurement points p on sections 3 of apparatuses 1 in assembly arrangements 10. The measurement device 20 comprises a control unit 21, a probe tip 22 and a sensor ball 23. The control unit 21 is mechanically connected to the probe tip 22 in well definable manner and may comprise any reference means, such as laser communication means in order to reference the control unit 21 and therefore the probe tip 22 in any of the longitudinal direction X, transverse direction Y and/or height direction Z. The probe tip engages the sensor ball 23, a surface of which can therefore be precisely referenced in any of the longitudinal direction X, transverse direction Y and/or height direction Z.

In the assembly arrangement 10 shown in Fig. 4, the sensor ball 23 sits precisely at the mounting point 15, for example, in the form of a tack hole. The outer surface of the sensor ball 23 therefore sits below the surface s on the respective mating surface 13 while the sensor ball 23 is precisely centred at the mounting point 15, for example with the help of the circumferential edge of the tack hole. The measurement point p measured in this position of the sensor ball 23 can thus be used as 1 of the reference points r, for example, formed at the flanges 14 for joining the sections 3 together.

Fig. 5 shows a schematic another representation of the measurement device applied for providing measurements to be used for determining concrete coordinates of further measurement points p on sections 3 of apparatuses 1. Here, the sensor ball 23 abuts the surface s on the mating surface 13. The respective measurement point p is thus situated right where the sensor ball 23 contacts the surface s.

Fig. 6 shows a schematic rear view of the first section 3a of the apparatus. Fig. 7 shows a schematic front view of the second section 3b of the apparatus 10. Here it becomes apparent how measurement points p constituting reference points r can be distributed along the mating surfaces 13, such that there are essentially arranged in the mirror-symmetric manner on the first mating surface 13a and the second mating surface 13b, respectively, as they oppose each other in the assembly arrangement 10.

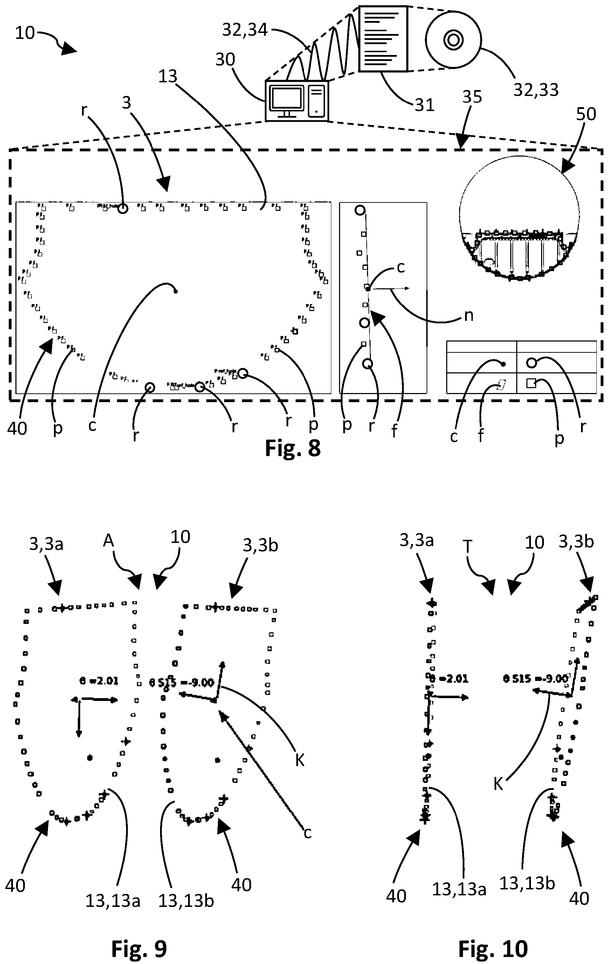

Fig. 8 shows a schematic representation of a computing device 30 for implementing a simulation method and/or assembly method by means of a respective assembly program 31 and/or computer-readable data carrier 32 as part of an assembly arrangement 10. The computing device 30 is configured to execute the assembly program 31. The computer-readable data carrier 32 has stored thereon the computer system integration program 31 and may take the form of a computer-readable medium 33 and/or data carrier signal 34. When carrying out the assembly program 31, the computing device 30 provides an assembly operation module 35 for managing, handling, processing and/or visualising and thus operating all data used in connection with the simulation method and/or assembly method as described herein.

To prevent high mechanical stresses in the structural components of the apparatus 2, the mating surfaces 13 must be aligned parallel to each other. The assembly process, based on actual measurement values p, r, should first be simulated and verified for an ideal orientation, e.g., positioning of the sections 3 as structural components of the apparatus 1. The simulation results provide The corrective values K and settings for the bearing points 11.

Design coordinates referring to the coordinate system constituted by the longitudinal direction X, the transverse direction Y and/or the height direction Z of the measurement points p, including reference points r, can be derived as a simulation set 40 derived from a design dataset 50. After obtaining the corresponding concrete coordinates of the measurement points p in the respective coordinate system by means of the measurement device 20 for each section 3 to be joined together, the measurement points p should be separated from the reference points r. A number M of measurement points p and/or a number N of reference points r can then be handled jointly as the simulation set 40 as listed in the table below for the first section 3a and the second section 3b, respectively:

Table 1: Measurement Points

| Section | Measurement Point | Section | Measurement Point |
|---------|-------------------|---------|-------------------|
| 3a | $r_1$ | 3b | r1 |
|  | r2 |  | r2 |
|  | $r_3$ |  | $r_3$ |
|  | r.. |  | r.. |
|  | rN |  | rN |
|  | P1 |  | P1 |
|  | P2 |  | P2 |
|  | $p_3$ |  | $p_3$ |
|  | p... |  | p... |
|  | pM |  | pM |

The simulation sets 40 for the first section 3a and the second section 3b, respectively, can be displayed in the simulation environment by means of the assembly operation module 35. Using the following mathematical approaches, the relative tilt angle $\alpha$ between the first mating surface 13a and the second mating surface 13b can be calculated. The centroids c of the mating surfaces 13 and the surface normal n must be calculated for this purpose, possibly with the help of a plane f fitted to the measurement points p. All translational and rotational corrections relate to the centroid c (centre point) of the respective flange 14.

An orthogonal regression method shall be used to calculate the surface normal n according to following equation 1.1 (overall shape for calculating a fitted plane f through all measurement points p):

$$\frac{min}{c_1\|n\|=1} \sum_{i-1}^{n}((p_i - c)^T n)^2 \quad (1.1)$$

The plane f shall first be drawn through all the measurement points p to calculate the surface normal n.

A next step may involve calculating the centroid, e.g., as a centre of gravity of the reference points r according to the following equation 1.2 (calculating the centre of gravity surface for a complete frame):

$$c = \frac{1}{n} \sum_{i-1}^{n} p_i \quad (1.2)$$

The following algorithm can be selected to calculate the fitted plane (determining the centroid c, e.g., as a centre of gravity surface for the complete flange 14):

$$c = \frac{1}{n}\sum_{i-1}^{n} p_i$$

In a further step, the surface normal n for the plane f can be determined with a singular value decomposition according to the following equation 1.3:

$$A = [p_i - c, \ldots, p_n - c] \qquad (1.3)$$

An implementation of the singular value decomposition can be achieved by the following equation 1.4:

$$USV^T = A \qquad (1.4)$$

The surface normal n (orthogonal to the plane) can be calculated by the following equation 1.5:

$$N = U(:,3) \qquad (1.5)$$

Fig. 9 shows a schematic perspective view of simulation sets 40 of measurement points p of the two sections 3 of the apparatus in an initial state A with the respective initial angle $\alpha$ between the surface normal n of the first section 3a and the second section 3b, respectively. Rotating the simulation sets 40, for example, in the form of points can be achieved by using a rotation and translation matrix as follows:

$$M_{Points} = Tanslation$$

Respective tilt angles $\alpha$ to be used as ration parameters K for the sections 3 may refer to a neutral reference system that is valid for both sections by providing a common longitudinal direction X, transverse direction Y and/or a height direction Z. The tilt angle $\alpha$ to be used as the correction parameter K can be calculated over the surface normal n for the respective section 3. Generating the plane f (through all the measurement points p for the relevant section 3) can be achieved by above formulae 1.1. The surface normal n, extending perpendicularly to the essentially vertical plane f, can be calculated over the three gaps of the nxn matrix according to above formula 1.5, which results from the decomposition of the respective singular values (see formula 1.4).

The tilt angle $\alpha$ for the first section 3a and the second section 3b can be added and results in the total angle between the sections, e.g., the mating surfaces 13 of the respective flange 14 according to the following equation:

$$Total\ Angle_{3a/3b} = Angle_{3b} - Angle_{3a}$$

Fig. 10 shows another schematic perspective view of the simulation set 40 off measurement points p of the two sections 3 of the apparatus 1 shown in Fig. 9 in a tilted and/or transitional state T. Here, a certain tilting motion has been performed between the 2 sections 3. Thus, the tilt angle $\alpha$ has been adjusted.

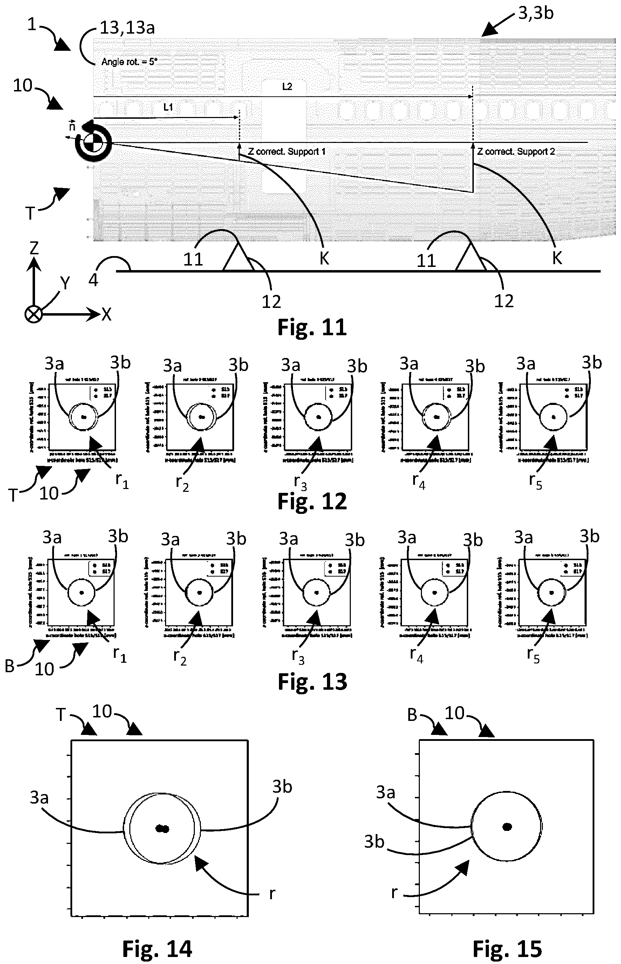

Fig. 11 shows a schematic representation of correction parameters K for aligning the two sections 3 of the apparatus 1 to each other in the tilted state T. The present example, the first section 3a can serve as a master part which remains fixed on the bearing points 11 carrying it. The second section 3b can be defined as a slave part, the position of which is to be adapted to the master part. Therefore, for example rotations around the transverse direction Y can be performed by adapting respective heights measured in the height direction Z of the bearing points 11 at their respective lengths $L_1$, $L_2$, for example, measured in parallel to the longitudinal direction X as respective distances from the second mating surface 13a.

Using the respective correction angles $\alpha$, the second mating surface of 13b can be aligned to be extending in parallel to the first mating surface 13a. The second section 3b can be rotated around its centroid c (see above equation 1.2) Due to the calculation relationship between the angle and aspect ratios, the parameter (Z correction values for the bearing points 11 at the respective lengths $L_1$, $L_2$) can be calculated using trigonometric functions.

After applying the correction parameters K for corrections of the angle $\alpha$, the sections 3 are supposed to be aligned along the transverse direction Y and the height direction Z. For remaining translational corrections, the calculated centroids c of the reference points r is listed in above Table 1 can be integrated. The centroid distances according to the reference points r will be calculated together along the longitudinal direction X and the transverse direction Y preferably in a common coordinate system.

The respective correction parameters K can be calculated in two steps. In a first of those 2 steps, relative distances between the centroids c of the reference points r can be calculated as follows (for example for 5 tack hole positions, respectively):

$$Y_{Distance} = Second\ Section\ 3b_{Centroid\ XYC} - First\ Section\ 3a_{Centroid\ XYZ}$$

The, in the second of said 2 steps, correction parameters K along the transverse direction Y and the height direction Z can be calculated over the following translation matrix:

$$K = T^*MT = 1\ 0\ 0\ 1\ 0\ 0\ 0\ Y\_Dist\ 0\ 0\ 0\ 1\ Z\_Dist\ 0\ 1\ *\ x1\ y1\ xn\ yn\ z1\ 1\ 1\ zn\ 1$$

Fig. 12 shows a schematic representation of reference points r of the two sections 3 of the apparatus before their alignment, i.e., in the tilted state T before applying final correction parameters K along the transverse direction Y and the height direction Z. Fig. 13 shows a schematic representation of the reference points of the two sections of the apparatus shown in Fig. 12 after their alignment. In the present example, five reference points $r_{1\ to\ 5}$ have been used as an overall reference system, which is valid for both sections 3, i.e., for each of the first section 3a and the second section 3b. Considering respective correction parameters K providing correction values for the transverse direction Y and the height direction Z, the reference points $r_{1\ to\ 5}$ for the first section 3a and the second section 3b may optimally aligned with respect to each other as shown in Fig. 13 with the reference points $r_{1\ to\ 5}$ and thus the first section 3a and the second section 3b being transferred into an aligned state B, for example by minimising their deviations by the smallest error square method.

Fig. 14 shows a schematic representation of one of the reference points r of the two sections 3 of the apparatus 1 in the tilted state T before its alignment. Fig. 15 shows a schematic representation of the reference points r of the two sections 3 of the apparatus shown in Fig. 14 in the aligned state B after their alignment. As can be seen, in the aligned state B, the reference points r are perfectly aligned with each other in a projection along a straight mating line extending in parallel the longitudinal direction X, such that the first section 3a and the second section 3b may be now joined by a simple translational movement along the longitudinal direction X.

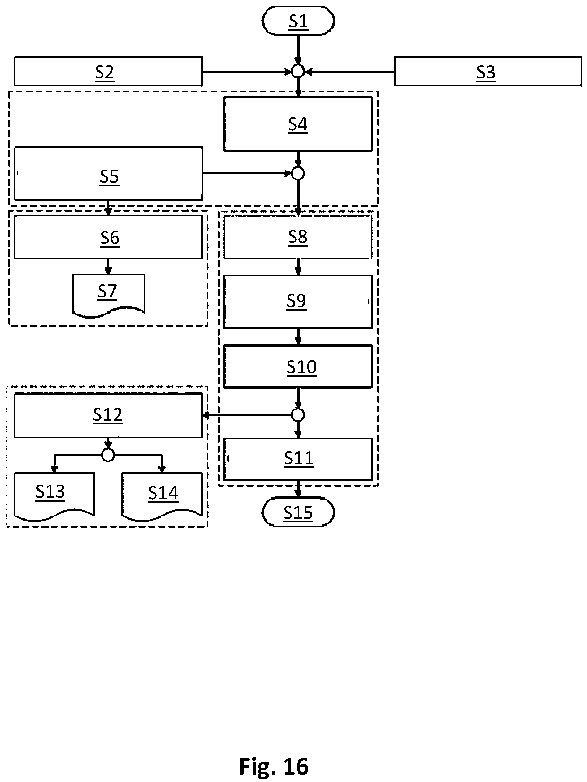

Fig. 16 shows a schematic representation of steps of a simulation method and/or assembly method. In a starting step S1, the method may be started. In a step S2, design data may be obtained from the design dataset 40. In a step S3, measurements of the measurement points p contained in the simulation set 40 derived from the design dataset 50 may be carried out. In a data collecting step S4, all data gathered regarding respective sections 3 to be joined can be loaded by the computing device 30. In a step S5, respective noisy data with artificial errors, in particular along the longitudinal direction X and a rotational error about the longitudinal direction X, the transverse direction Y and/or the height direction Z may be applied. In a step S6, respective noisy frames created in step S5 may be visualised, possibly by creating respective graphics by means of the assembly operation module 35 in a step S7.

In a step S8, centroids c may be calculated. In a step S9, the fitted plane f may be calculated through all available measurement points p and the surface normal n may be determined. In a step S10, respective angles $\alpha$ between the surface normal n of the sections 3 facing each other may be calculated. In a step S11, the correction parameters K for the bearing points 11 may be calculated. Additionally, in a step S12, the results may be visualised. Therefore, in a step S13, a 3D-scatter of the entire process may be generated. In a step S14, it 2D-scatter of the reference points r may be generated. In a step S15, at least a simulation method may end.

List of Reference Signs

| | |
|---|---|
| 1 | apparatus / aircraft |
| 2 | fuselage |
| 3 | section |
| 3a-e | first to fifth section |
| 4 | ground |
| 5 | landing gear |
| | |
| 10 | assembly arrangement |
| 11 | bearing point |
| 12 | jig |
| 13 | mating surface |
| 13a | first mating surface |
| 13b | second mating surface |

14      flange
15      mounting point

20      measurement device
21      control unit
22      probe tip
23      sensor ball

30      computing device
31      assembly program
32      computer-readable data carrier
33      computer-readable medium
34      data carrier signal
35      assembly operation module
40      simulation set

50      design dataset

c       centroid
d       distance
n       surface normal
p       measurement point
r       reference point
s       surface

A       initial state
B       aligned state
K       correction parameter
L       Length
T       tilted / transitional state
X       longitudinal direction
Y       transverse direction
Z       height direction

$\alpha$      angle

S1      start
S2      obtain design data
S3      measure
S4      collect data
S5      create noisy data
S6      visualise noisy frames
S7      create graphics
S8      calculate centroids
S9      calculate fitted plane and surface normal
S10     calculate angles
S11     calculate correction parameters
S12     visualise results
S13     generate 3D-scatter
S14     generate 2D-scatter
S15     end

**Claims**

1.  Simulation method of simulating correction parameters (K) for aligning a first mating surface (13a) of a first section (3a) and a second mating surface (13b) of a second section (3b) of an apparatus (1), in particular an airframe of an aircraft, with respect to each other, comprising the steps of obtaining design coordinates of a simulation set (40) of measurement points (p) on each of the first section (3a) and the second section (3b) measuring concrete coordinates of at least some of the measurement points (p) of the simulation set (40) when the first mating surface (13a) and the second mating surface (13b) are arranged such that they are facing each other within a predefined distance range from each other; comparing the design coordinates to the concrete coordinates; and deriving at least one correction parameter (K) from the comparison.

2. Simulation method according to claim 1, wherein the step of obtaining the measurement points (p) involves extracting design parameters relating to the design coordinates from a design data set (50) at least partly representing the first section (3a) and the second section (3b).

3. Simulation method according to claim 1 or 2, wherein a number of concrete coordinates of at least some of the measurement points (p) of the simulation set (40) used for the comparison amounts to at least 3, preferably at least 10, most preferably at least 20.

4. Simulation method according to at least one of claims 1 to 3, wherein the simulation set (40) contains

a surface subset of measurement points (p) relating to the first mating surface (13a) and to the second mating surface (13b) and/or
a reference subset of measurement points (p) relating to reference points (r) on the first section (3a) and the second section (3b).

5. Simulation method according to claim 4, wherein at least some of the reference points (r) refer to tack holes for mechanically connecting the first section (3a) and the second section (3b) with each other.

6. Simulation method according to at least one of claims 1 to 5, wherein the correction parameters (K) describe rotational motions and/or translational motions of at least one of the first section (3a) and the second section (3b).

7. Simulation method according to at least one of claims 1 to 6, further comprising the step of determining a centroid (c) and/or a surface normal (n) for at least one of the first mating surface (13a) and the second mating surface (13a).

8. Simulation method according to claims 7, further comprising the steps of determining a relative distance (d) between the centroid (c) of the first mating surface (13a) and the centroid (c) of the second mating surface (13b).

9. Simulation method according to at least one of claims 1 to 8, further comprising the step of determining a relative tilt angle ($\alpha$) between the first mating surface (13a) and the second mating surface (13b).

10. Simulation method according to at least one of claims 1 to 9, wherein the first section (3a) serves as a master part having a fixed position and the second section serves as slave part having a variable position.

11. Assembly method for assembling a first section (3a) and a second section (3b) of an apparatus (1), in particular an airframe of an aircraft, along a first mating surface of the first section (3a) and a second mating surface (13b) of the second section (3b), comprising the steps of

arranging the first mating surface (13a) and the second mating surface (13b) such that they are facing each other within a predefined distance range from each other; and
aligning the first mating surface (13a) and the second mating surface (13b) in a projection along a straight mating line based on at least one correction parameter (K) of the first mating surface (13a) and/or the second mating surface (13b) derived from a computer-implemented simulation method according to at least one of claims 1 to 10.

12. An assembly program (31) comprising instructions which, when the program is executed by a computing device (30), cause the computing device (30) to carry out a simulation method according to at least one of claims 1 to 10 and/or an assembly method according to claim 11.

13. A computer-readable data carrier (32, 33, 34) having stored thereon the assembly program (31) of claim 12.

14. A computing device (30) configured to carry out an assembly program (31) according to claim 12 and/or comprising a computer-readable data carrier (32, 33, 34) according to claim 13.

15. Assembly arrangement (10) for assembling a first section (3a) and a second section (3b) of an apparatus (1), in particular an airframe of an aircraft, along a first mating surface of the first section (3a) and a second mating surface (13b) of the second section (3b), configured to carry out the assembly method according to claim 11, comprising an assembly program according to claim 12, comprising a computer-readable data-carrier (32, 33, 34) according to claim 13, and/or comprising a computing device according to claim 14.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

| | Europäisches Patentamt<br>European Patent Office<br>Office européen des brevets | **EUROPEAN SEARCH REPORT** | **Application Number**<br>EP 23 21 2299 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X<br><br>Y | US 2017/210489 A1 (BODE AKSEL [US] ET AL)<br>27 July 2017 (2017-07-27)<br>* abstract *<br>* [002], [006], [0021], [0029], [0030],<br>[0032], [0033], [0037], [0038], [0042],<br>[0044], [0045], [0047], [0053], [0054],<br>[0062], [0078] *<br>* claims 1, 7, 8 *<br>* figures 5-7 *<br>* the whole document *<br>----- | 1-10,<br>12-15<br>11 | INV.<br>B64F5/10<br>G06F30/15<br>G06F30/20<br><br>ADD.<br>G06F113/28<br>G06F111/20 |
| X<br><br>Y | US 9 068 809 B1 (LAGALLY CHRISTIE DUSTY<br>[US] ET AL) 30 June 2015 (2015-06-30)<br>* abstract *<br>* figures 4, 10 *<br>* col. 1, ln. 20-44<br>col. 2, ln. 33-36<br>col. 2, ln. 40-60<br>col. 4, ln. 47-51<br>col. 7, ln. 55-67<br>col. 10, ln. 39-61<br>col. 11, ln. 38-40;<br>claim 1 *<br>* the whole document *<br>----- | 1-10,<br>12-15<br>11 | |
| X<br><br>A | US 10 275 565 B2 (BOEING CO [US])<br>30 April 2019 (2019-04-30)<br>* abstract *<br>* claim 1; figures 2, 9 *<br>* the whole document *<br>----- | 1-10,<br>12-15<br>11 | TECHNICAL FIELDS<br>SEARCHED (IPC)<br><br>B64F<br>G06F |
| X<br><br>A | US 8 606 388 B2 (COBB JAMES M [US]; BARNES<br>JOHN G [US] ET AL.)<br>10 December 2013 (2013-12-10)<br>* abstract *<br>* the whole document *<br>----- | 1-10,<br>12-15<br>11 | |

-/--

The present search report has been drawn up for all claims

| Place of search | Date of completion of the search | Examiner |
|---|---|---|
| Munich | 24 April 2024 | Brandiska, Pavlina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

Europäisches
Patentamt

European
Patent Office

Office européen
des brevets

## EUROPEAN SEARCH REPORT

**Application Number**

**EP 23 21 2299**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 132 479 B1 (TYSON II JOHN [US]) 28 September 2021 (2021-09-28) | 1-10, 12-15 | |
| A | * abstract * * the whole document * ----- | 11 | |

TECHNICAL FIELDS SEARCHED      (IPC)

The present search report has been drawn up for all claims

| Place of search | Date of completion of the search | Examiner |
|---|---|---|
| Munich | 24 April 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2299

This annex lists the patent family members relating to the patent documents cited in  the above-mentioned European search report.
The members are as contained in the European Patent Office EDP file on
The European Patent Office is in no way liable for these particulars which are merely given for the purpose of information.

24-04-2024

| Patent document cited in search report | | | Publication date | Patent family member(s) | | Publication date |
|---|---|---|---|---|---|---|
| US 2017210489 | A1 | | 27-07-2017 | CA | 2948485 A1 | 22-07-2017 |
| | | | | CN | 106995062 A | 01-08-2017 |
| | | | | EP | 3196720 A1 | 26-07-2017 |
| | | | | ES | 2784320 T3 | 24-09-2020 |
| | | | | US | 2017210489 A1 | 27-07-2017 |
| US 9068809 | B1 | | 30-06-2015 | US | 9068809 B1 | 30-06-2015 |
| | | | | US | 2015276376 A1 | 01-10-2015 |
| US 10275565 | B2 | | 30-04-2019 | BR | 102016024179 A2 | 09-05-2017 |
| | | | | CA | 2939049 A1 | 06-05-2017 |
| | | | | CN | 106697326 A | 24-05-2017 |
| | | | | EP | 3168162 A1 | 17-05-2017 |
| | | | | US | 2017132355 A1 | 11-05-2017 |
| | | | | US | 2019205501 A1 | 04-07-2019 |
| US 8606388 | B2 | | 10-12-2013 | US | 2009112349 A1 | 30-04-2009 |
| | | | | US | 2011270571 A1 | 03-11-2011 |
| | | | | US | 2011276172 A1 | 10-11-2011 |
| US 11132479 | B1 | | 28-09-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4181009 A1
- US 11526636 B2
- US 10430548 B2